# EUROPÄISCHE PATENTANMELDUNG

(11) **EP 1 294 064 A2**
(43) Veröffentlichungstag der Anmeldung: **19.03.2003**
(21) Anmeldenummer: 02015415.9
(22) Anmeldetag: 11.07.2002
(51) Int. Cl.: H02B 13/00

(54) **Kontaktverbindung von gasisolierten Schaltfedern in Schaltanlagen**

(30) Priorität: 18.09.2001 DE 10145900
(71) Anmelder: Alstom, 75116 Paris (FR)
(72) Erfinder: Kraus, Gerhard, Dipl.-Ing., 93356 Teugn (DE); Werner, Franz, 93083 Gebelkofen (DE)
(74) Vertreter: Dreiss, Fuhlendorf, Steimle & Becker

(57) **Zusammenfassung**

Die Erfindung geht aus von Mittelspannungsschaltanlagen mit gasisolierten Schaltfeldern oder Modulen, die über Kontakverbindungen aneinander gereiht werden, wobei an die elektrische Abdichtung als auch an die Gasabdichtung selbst besondere Anforderungen gestellt werden. Bekannt sind Vorrichtungen zur Kontaktverbindung mittels Doppelkonus-Steckverbindungen, die entweder als Innen- oder als Außenkonus ausgebildet sind.

Es wird hier vorgeschlagen, dass zur Verbindung der gasisolierten Schaltfelder innerhalb der Schaltanlage die Vorrichtung für die Kontaktverbindung mindestens eine jeweils aus der Gasbehälter-Seitenwand herausragende Thermoplast-Durchführung (1, 2) hat, die eine Stirnfläche und einen elektrischen Kontakt (5, 5') aufweist, und auch ein zwischen beiden gegenüberstehenden Stirnflächen angeordnetes elastisches, ringscheibenförmiges Isolierstoffteil (3) zur elektrischen Abdichtung der Kontaktverbindung sowie einen Druckring (4) aufweist, der in die Ränder der beiden Stirnflächen greift und die Stirnflächen der Durchführungen (1, 2) gegen das Isolierstoffteil (3) presst.

Durch diese Maßnahmen wird eine Kontakverbindung zwischen den Schaltfeldern bzw. Modulen geschaffen, die nicht nur mehr Toleranz beim Zusammenschalten der Teile zu einer Schaltanlage bietet und kostengünstiger ist als die herkömmlichen Lösungen, sondern auch in ihrer Funktion als elektrische Abdichtung resistent ist gegen Bewegungen der Schaltfelder bzw. Module aufgrund von Wäremausdehnungen, Durchbiegung der Seitenwände bei Gasdruckänderung und dergleichen mehr.

## Beschreibung

Die Erfindung geht aus von Mittelspannungsschaltanlagen mit gasisolierten Schaltfeldern oder Modulen, die über Kontaktverbindungen aneinander gereiht werden, wobei an die elektrische Abdichtung als auch an die Gasabdichtung selbst besondere Anforderungen gestellt werden.

Bekannt sind Vorrichtungen zur Kontaktverbindung mittels Doppelkonus-Steckverbindungen, die entweder als Innen- oder als Außenkonus ausgebildet sind. Diese Lösungen erfordern eine hochgenaue Toleranz beim Positionieren der Schaltfelder zueinander. So ist etwa ein großer Abstand der anzureihenden Schaltfelder oder Module erforderlich. Auch sind hohe Anforderungen hinsichtlich der Koaxialität zu erfüllen. Ebenso ist ein großer Einbauraum innerhalb des jeweiligen Schaltfeldes erforderlich. Das führt letztlich zu hohen Kosten bei der Realisierung dieser bekannten Lösungen.

Aufgabe der Erfindung ist es, eine Vorrichtung für eine Kontaktverbindung von zwei gasisolierten Schaltfeldern vorzuschlagen, bei der die oben genannten Nachteile nicht auftreten. Außerdem sollen ein zu kontaktierendes Schaltfeld und eine damit ausgestattete Schaltanlage vorzuschlagen werden.

Gelöst wird diese Aufgabe durch eine Vorrichtung mit den Merkmalen des Anspruchs 1 und durch ein Schaltfeld sowie durch eine Schaltanlage mit den Merkmalen nach einem der nebengeordneten Ansprüche.

Demnach wird vorgeschlagen, dass zur Verbindung der gasisolierten Schaltfelder innerhalb der Schaltanlage die Vorrichtung für die Kontaktverbindung mindestens eine jeweils aus der Gasbehälter-Seitenwand herausragende Thermoplast-Durchführung hat, die eine Stirnfläche und einen elektrischen Kontakt aufweist, und auch ein zwischen beiden gegenüberstehenden Stirnfllächen angeordnetes elastisches, ringscheibenförmiges Isolierstoffteil zur elektrischen Abdichtung der Kontaktverbindung sowie einen Druckring aufweist, der in die Ränder der beiden Stirnflächen greift und die Stirnflächen der Durchführungen gegen das Isolierstoffteil presst.

Durch diese Maßnahmen wird eine Kontakverbindung zwischen den Schaltfeldern bzw. Modulen geschaffen, die nicht nur mehr Toleranz beim Zusammenschalten der Teile zu einer Schaltanlage bietet und kostengünstiger ist als die herkömmlichen Lösungen, sondern auch in ihrer Funktion als elektrische Abdichtung resistent ist gegen Bewegungen der Schaltfelder bzw. Module aufgrund von Wäremausdehnungen, Durchbiegung der Seitenwände bei Gasdruckänderung und dergleichen mehr.

Vorteilhafte Ausführungen ergeben sich aus den Unteransprüchen.

Es ist demnach besonders vorteilhaft, wenn zusätzlich eine erste Ringfeder über den Außenrand des elastischen, ringscheibenförmigen Isolierstoffteils gespannt wird. Diese Ringfeder sichert zuverlässig die Durchführung im Schaltfeld-Behälters.

Wenn außerdem um die elektrischen Kontakte mehrere Kontaktelemente angeordnet sind, die eine Elektrodenform aufweisen, und wenn mindestens eine zweite Ringfeder die Kontaktelemente zusammen hält und zur elektrischen Kontaktierung gegen die Kontakte presst, dann wird eine besonders gute und sichere elektrische Abdichtung erzielt.

In diesem Zusammenhang ist es besonders vorteilhaft, wenn das ringscheibenförmige Isolierstoffteil auf dem Außenrand unterhalb der ersten Ringfeder eine erste Elektrode aufweist, die in das Isolierstoffteil eingegossen ist, und die vorzugsweise mit der ersten Ringfeder elektrisch verbunden ist. Damit wird das elektrische Feld zwischen dem spannungsführenden Kontaksystem und dem Erdpotential des Behälters gesteuert.

Erhöht wird dieser Effekt, wenn außerdem noch das ringscheibenförmige Isolierstoffteil auf dem Innenrand eine zweite Elektrode aufweist, die in das Isolierstoffteil eingegossen und der Elektrodenform der Kontaktsegmente angepasst ist, und die vorzugsweise mit den Kontaktelementen elektrisch verbunden ist.

Weitere besondere Vorteile ergeben sich, wenn jeweils auf der Innenseite der jeweiligen Gasbehälter-Seitenwand eine dritte Ringfeder angeordnet ist, die die Durchführung mechanisch sichert, und wenn eine Dichtung vorgesehen ist, die die Durchführung abdichtet. Die Abdichtungsfunktion der Vorrichtung wird weiter erhöht, wenn der Druckring als Gewindering oder als Bajonettverschluss ausgebildet ist.

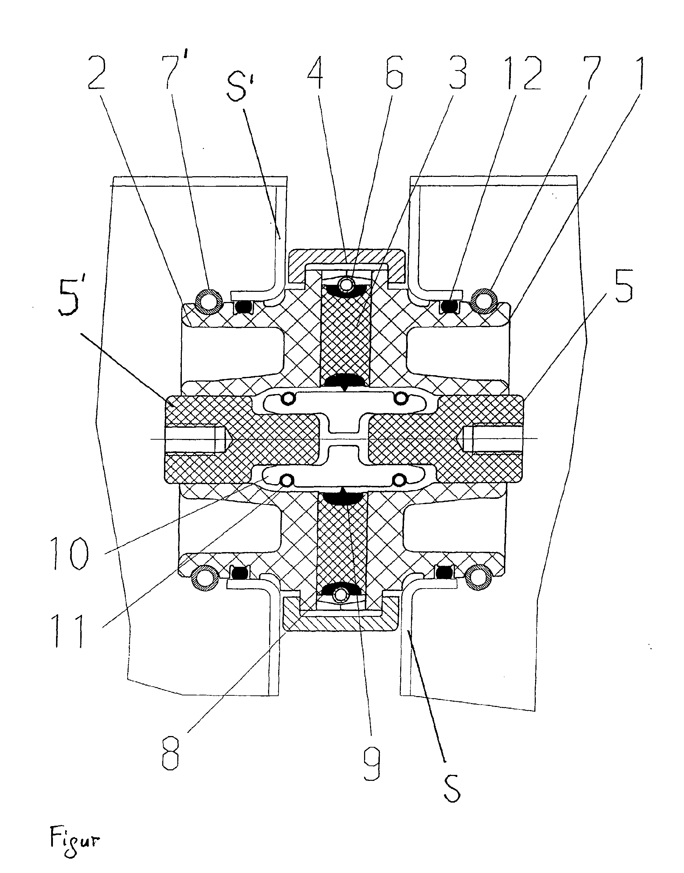

Im Folgenden wird nun die Erfindung und die sich daraus ergebenden Vorteile anhand eines Ausführungsbeispieles und unter Zuhilfenahme der beiliegenden Zeichnung näher beschrieben:
In der beiliegenden Figur ist schematisch der Aufbau einer erfindungsgemäßen Vorrichtung für eine Kontaktverbindung von zwei gasisolierten Schaltfeldern dargestellt. Die Figur zeigt dabei die Vorrichtung im Querschnitt, dessen nachfolgende Beschreibung sich hauptsächlich auf die elektrische Abdichtung der dargestellten Kontaktverbindung bezieht.

Von den beiden anzureihenden Schaltfeldern sind Teile der gegenüberliegenden Gasbehälter-Seitenwände S und S' dargestellt. Jede Gasbehälter-Seitenwand ist mit einer Thermoplast-Durchführung 1 bzw. 2 ausgestattet. Jede Durchführung 1 oder 2 beinhaltet wiederum je einen elektrischen Kontakt 5 bzw. 5' sowie eine ebene, radiale Dichtfläche für die elektrische Abdichtung. Die elektrischen Kontakte 5 bzw. 5' können jeweils fest in die zugehörige Durchführung 1 bzw. 2 eingegossen sein. Es ist aber auch eine bewegliche Lagerung möglich.

Jede Durchführung 1 oder 2 ist in einem Blechdurchzug der entsprechenden Seitenwand S bzw. S' gelagert und durch eine Elastomer-Dichtung 12 abgedichtet. Dadurch hat die jeweilige Durchführung in axialer Richtung eine Bewegungsfreiheit von einigen Millimetern.

Bei einer Anreihung von Schaltfeldern wird zwischen den ebenen Dichtflächen der Durchführungen 1 und 2 ein elastisches, scheibenförmiges Isolierstoffteil 3 zur elektrischen Abdichtung eingesetzt. Das Isolierstoffteil wird wegen seiner Form im Weiteren auch kurz Isolierscheibe genannt. Die beiden Thermoplast-Durchführungen 1 und 2, insbesondere die Stirnflächen und die Isolierscheibe 3, werden mit Hilfe eines Druckringes 4 parallel zusammengepresst. Dieser Ring ist vorzugweise als Gewindering oder Bajonettverschluss ausgebildet.

Die Vorrichtung, die die beiden Durchführungen 1 und 2, die Isolierscheibe 3 und den Druckring 4 umfasst, bildet eine funktionell eigenständige Baugruppe. Nach der Verbindung der vorgenannten Bauteile mit Hilfe des Druckrings 4 verändert sich die Lage dieser Bauteile nicht mehr. Die Baugruppe wird durch Bewegungen der Behälterseitenwände aufgrund von Wärmeausdehnung, Veränderung des Isoliergasdrucks usw. nicht beeinflusst.

Aufgrund der Bauteilabmessungen ergibt sich für die Isolierstoffteil 3 ein genau definierter Einbauraum, so dass die elektrisch dichtende Funktion der Isolierscheibe 3 einwandfrei gewährleistet ist und erhalten bleibt. Um die Elastizität der Isolierscheibe 3 zu verbessern, insbesondere hinsichtlich einer Langzeitbelastung, ist zusätzlich eine Ringfeder 6 über den Außendurchmesser gespannt. Bei der Positionierung der anzureihenden Schaltfelder sind verhältnismäßig große Abstands- und Lagetoleranzen zulässig.

Das elektrische Feld dieser Anordnung zwischen dem spannungsführenden Kontaktsystem sowie dem Erdpotenial des jeweiligen Behälters wird durch folgende Bauelemente gesteuert: Durch Ringfedern 7 bzw. 7', die zur Sicherung der Durchführungen 1 und 2 im entsprechenden Behälter angebracht sind; durch den Radius des Behälterdurchzugs; durch eingegossene Elektroden 8 und 9, welche in die Isolierscheibe 3 eingelassen sind; und durch elektrische Kontaktsegmente 10, welche eine entsprechende Elektrodenform aufweisen.

Die elektrische Kontaktverbindung erfolgt im Wesentlichen durch diese ringförmig angeordneten Kontaktsegmente 10. Dabei wird die Kontaktkraft durch zwei Ringfedern 11 erzeugt, welche die Kontaktsegmente 10 umschließen.

Bei der beschriebenen Konktaktverbindung stellt die Dichtfläche zwischen den Durchführungen 1 bzw. 2 und der Isolierscheibe 3 eine "Elektrische Edelfuge" dar, d.h. es wird eine äußerst hochwertige und effiziente elektrische Abdichtung gebildet, die abgekoppelt ist von Bewegungen der verbundenen Schaltfelder. Einflüsse wie etwa Wärmeausdehnung, Durchbiegung der Seitenwände aufgrund von Änderung des Gasdruckes usw. wirken sich demnach nicht negativ auf die Kontaktierung und vor allem nicht auf die "Elektrische Edelfuge" aus. Die elektrische Abdichtung ist jederzeit sichergestellt und von höchster Qualität.

Außerdem ist die Vorrichtung aufgrund der beschriebenen Konstruktionsmerkmale sehr kompakt gestaltet. Sie ist auch relativ leicht zu montieren, da lediglich sehr reduzierte Toleranzanforderungen eingehalten werden müssen. Hinzu kommt eine deutliche Kostenreduzierung gegenüber den bekannten Konus-Systemen. Nicht zuletzt aufgrund dieser Vorteile ist die erfindungsgemäße Vorrichtung bestens dazu geeignet, zum Verbinden von Schaltfeldern und Modulen in Schaltanlagen, insbesondere in gasisolierten Mittelspannungschaltanlagen, eingesetzt zu werden.

## Patentansprüche

1. Vorrichtung für eine Kontaktverbindung von zwei gasisolierten Schaltfeldern oder zwei Modulen für eine Schaltanlage, mit jeweils mindestens einer aus der Gasbehälter-Seitenwand (S) des jeweiligen Schaltfelds bzw. Moduls herausragenden Thermoplast-Durchführung (1, 2), die eine Stirnfläche und einen elektrischen Kontakt (5, 5') aufweist, und mit einem zwischen beiden gegenüberstehenden Stirnflächen der Durchführungen (1, 2) zur elektrischen Abdichtung der Kontaktverbindung angeordneten elastischen, ringscheibenförmigen Isolierstoffteil (3), sowie mit einem Druckring (4), der in die Ränder der beiden Stirnflächen greift und die Stirnflächen der Durchführungen (1, 2) gegen das Isolierstoffteil (3) presst.

2. Vorrichtung nach Anspruch 1, bei der eine erste Ringfeder (6) über den Außenrand des elastischen, ringscheibenförmigen Isolierstoffteils (3) gespannt ist.

3. Vorrichtung nach Anspruch 1, bei der um die elektrischen Kontakte (5, 5') herum mehrere Kontaktelemente (10) angeordnet sind, die eine Elektrodenform aufweisen, und bei der mindestens eine zweite Ringfeder (11) die Kontaktelemente (10) zusammen hält und zur elektrischen Kontaktierung gegen die Kontakte (5, 5') presst.

4. Vorrichtung nach Anspruch 3, bei der das ringscheibenförmige Isolierstoffteil (3) auf dem Außenrand unterhalb der ersten Ringfeder (6) eine erste Elektrode (8) aufweist, die in das Isolierstoffteil (3) eingegossen ist.

5. Vorrichtung nach Anmpruch 3 oder 4, bei der das ringscheibenförmige Isolierstoffteil (3) auf dem Innenrand eine zweite Elektrode (9) aufweist, die in das Isolierstoffteil (3) eingegossen und vorzugsweise über eine Lippe oder dergleichen mit den Kontaktsegmenten (10) verbunden ist.

6. Vorrichtung nach einem der vorhergehenden Ansprüche, bei der jeweils auf der Innenseite der jeweiligen Gasbehälter-Seitenwand (S) eine dritte Ringfeder (7, 7') angeordnet ist, die die Durchführung mechanisch sichert, vorzugsweise unter Belassung einer axialen Beweglichkeit.

7. Vorrichtung nach einem der vorhergehenden Ansprüche, bei der eine Dichtung (12) vorgesehen ist, die die Durchführung (12) abdichtet.

8. Vorrichtung nach einem der vorhergehenden Ansprüche, bei der der Druckring (4) als Gewindering oder als Bajonettverschluss ausgebildet ist.

9. Gasisoliertes Schaltfeld oder Modul für eine Schaltanlage, mit einer Vorrichtung für eine Kontaktverbindung von dem Schaltfeld bzw. Modul mit einem anderen Schaltfeld bzw. Modul, mit jeweils mindestens einer aus der Gasbehälter-Seitenwand (S) des Schaltfelders bzw. Moduls herausragenden Thermoplast-Durchführung (1, 2), die eine Stirnfläche und einen elektrischen Kontakt (5, 5') aufweist, mit einem zwischen beiden gegenüberstehenden Stirnfllächen der Durchführungen (1, 2) zur elektrischen Abdichtung der Kontaktverbindung angeordneten elastischen, ringscheibenförmigen Isolierstoffteil (3), sowie mit einem Druckring (4), der in die Ränder der beiden Stirnflächen greift und die Stirnflächen der Durchführungen (1, 2) gegen das Isolierstoffteil (3) presst.

10. Schaltanlage mit mindestens zwei aneinander gereihten gasisolierten Schaltfeldern oder Modulen, mit einer Vorrichtung für eine Kontaktverbindung der Schaltfelder bzw. Module, mit jeweils mindestens einer aus der Gasbehälter-Seitenwand (S) des jeweiligen Schaltfelders bzw. Moduls herausragenden Thermoplast-Durchführung (1, 2), die eine Stirnfläche und einen elektrischen Kontakt (5, 5') aufweist, mit einem zwischen den beiden gegenüberstehenden Stirnfllächen der Durchführungen (1, 2) zur elektrischen Abdichtung der Kontaktverbindung angeordneten elastischen, ringscheibenförmigen Isolierstoffteil (3), sowie mit einem Druckring (4), der in die Ränder der beiden Stirnflächen greift und die Stirnflächen der Durchführungen (1, 2) gegen das Isolierstoffteil (3) presst.
